**Europäisches Patentamt**

**European Patent Office**

**Office européen des brevets**

(19)

(11) Veröffentlichungsnummer : **0 391 046 B1**

(12) # EUROPÄISCHE PATENTSCHRIFT

(45) Veröffentlichungstag der Patentschrift :
**23.12.92 Patentblatt 92/52**

(51) Int. Cl.⁵ : **F16L 55/16**

(21) Anmeldenummer : **90103004.9**

(22) Anmeldetag : **16.02.90**

(54) **Verfahren zum Verbinden eines sanierten Abwasserkanals mit einem einmündenden Hausanschluss oder dergleichen.**

(30) Priorität : **07.04.89 DE 3911267**

(43) Veröffentlichungstag der Anmeldung :
**10.10.90 Patentblatt 90/41**

(45) Bekanntmachung des Hinweises auf die
Patenterteilung :
**23.12.92 Patentblatt 92/52**

(84) Benannte Vertragsstaaten :
**AT BE CH DE FR GB LI LU NL SE**

(56) Entgegenhaltungen :
**EP-A- 0 029 343
EP-A- 0 253 588
DE-A- 3 618 963
GB-A- 2 041 147
GB-A- 2 147 966**

(73) Patentinhaber : **TEERBAU Gesellschaft für
Strassenbau mbH
Prinz-Friedrich-Strasse 3
W-4300 Essen 15 (DE)**

(72) Erfinder : **Die Erfinder haben auf ihre Nennung
verzichtet**

EP 0 391 046 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft ein Verfahren zum Verbinden eines mit einem faserverstärkten, härtbaren Kunststoffschlauch sanierten, nicht begehbaren Abwasserkanals mit einem in diesen einmündenden Hausanschluß oder dergleichen, nachdem der Kunststoffschlauch in dem Kanal ausgehärtet ist.

Die Sanierung von Abwasserkanälen mit härtbaren, faserverstärkten Kunststoffschläuchen und die Herstellung dieser Schläuche ist beispielsweise aus der DE-C-28 34 511 und der EP-A- 0 122 246 bekannt.

Weiterhin ist beispielsweise aus der DE-A-36 18 963 bekannt, bei der Sanierung von nicht begehbaren Abwasserkanälen mit starren Kunststoff-Kurzrohren den Hausanschlußkanal nach Größe und Lage z. B. mittels einer Fernsehkamera zu orten das entsprechende Kurzrohr außerhalb des Kanals mit einer Anschlußöffnung zu versehen und mit einer geeigneten Vorrichtung in den Kanal einzuführen und zu positionieren, und danach die Anschlußstelle mit einer Polyesterspachtelmasse dichtschließend auszuspachteln. Für das Ausspachteln wird dabei ein Schild verwendet, der auf der dem Anschluß zugewandten Seite mit einer elastischen Membran oder einem Balg versehen ist, auf die die Spachtelmasse aufgetragen wird. Die Membran wird mit einem erwärmten Gas oder einem anderen Heizmittelfluid aufgeweitet, wobei sich die Spachtelmasse in den offenen Ringraum zwischen Innenrohr und Kanal preßt und so die Anschlußstelle abdichtet. Nach dem Aushärten wird die Membran durch Absenken des Druckes von der Spachtelmasse getrennt. Die Verwendung von Heizmittelfluiden zum thermischen Aushärten der Kunststoffspachtelmassen ist jedoch problematisch, da die Aushärtezeit erheblich von der Wärmeabführung des Heizmittels bzw. der Spachtelmasse an die Umgebung abhängig ist. Die Wärmeabführung läßt sich jedoch, bedingt durch verschiedene Werkstoffe der zu verbindenden Kanäle (Beton, Steinzeug, Stahl) und durch das im Ringraum zwischen Innenrohr und Abwasserkanal verbliebende Abwasser, nur schwer quantifizieren. Die erforderliche Aushärtezeit ist daher im Einzelfall nicht genau bestimmbar und eine einwandfreie Abdichtung nicht zu garantieren, oder es müssen Aushärtezeiten von 30 min und mehr in Kauf genommen werden. Da ein an der Kanalwandung eng anliegender, ausgehärteter Kunststoffschlauch nicht außerhalb des Abwasserkanals mit einer Öffnung für einen Hausanschluß versehen werden kann, ist das bekannte System außerdem nicht auf den vorliegenden Fall übertragbar.

Aus der EP-A-0 029 343 ist eine auf einem Schlitten montierte Fräsvorrichtung bekannt, mit deren Hilfe es möglich ist, nach dem Sanieren eines nicht begehbaren Abwasserkanals mit einem aushärtbaren Kunststoffschlauch die Seitenanschlüsse freizulegen. Die Vorrichtung ist mit Fernsehkameras zur genauen Positionierung und Überwachung des Fräsvorganges ausgerüstet. Das alleinige Ausfräsen der Anschlußöffnung ist jedoch für eine ordnungsgemäße Sanierung nicht ausreichend, da auch bei mit Überdruck an die Kanalwandung gepreßten Kunststoffschläuchen ein geringer Spalt zwischen diesen und der Wandung verbleibt, durch den das Abwasser in das Erdreich sickern kann.

Es bestand daher die Aufgabe, ein Verfahren unter Verwendung der bekannten Vorrichtungen zu entwickeln, um einen mit einem faserverstärkten, aushärtbaren Kunststoffschlauch sanierten Abwasserkanal mit einem Hausanschluß oder dergleichen dicht zu verbinden.

Die Aufgabe wird erfindungsgemäß durch das im Anspruch 1 dargelegte Verfahren gelöst.

Als Strahlungsquelle dient je nach Kunststoffart vorzugsweise eine IR- oder UV-Lampe. Die Kunstharzmasse ist üblicherweise mit Füllstoffen wie Glasmikrohohlkugeln und/oder organischen oder mineralischen Fasern, insbesondere Glasfasern, verstärkt.

Die Kunststoffmasse wird ringförmig auf eine Auftragsvorrichtung aufgebracht, wie sie beispielsweise aus der DE-A-36 18 963 bekannt ist. Die Membran ist jedoch aus einem IR- bzw. UV-Licht-durchlässigen, vorzugsweise elastischen Material, in dessen Innerem die Strahlungsquelle angeordnet ist. Die Aushärtung der Kunstharzmasse ist somit von der Wärmeableitung weitgehend unabhängig, und die Aushärtzeiten lassen sich exakt einstellen.

Die Auftragsvorrichtung ist ebenso wie die Fräsvorrichtung in einem mit Kufen oder Rollen versehenem Gestell steuerbar, räumlich beweglich angeordnet. Das Gestell wird mit einer Seilzugvorrichtung durch den ausgehärteten Kunststoffschlauch bewegt. Die richtige Positionierung wird mit einer Fernsehkamera überwacht.

Die Erfindung wird anhand der Zeichnungen beispielhaft erläutert.

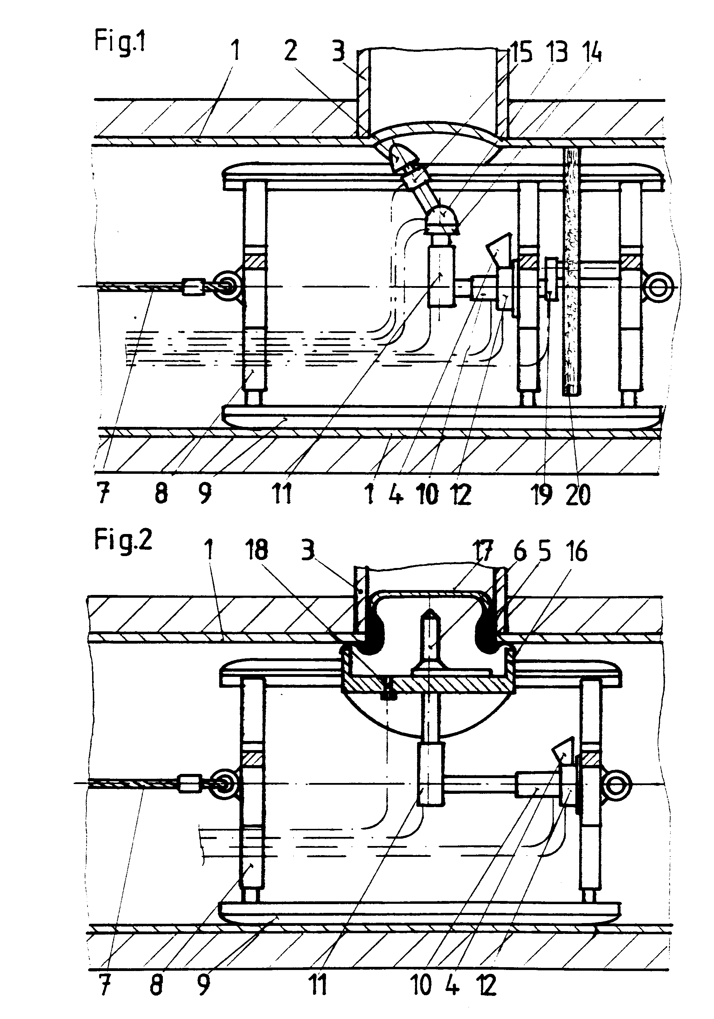

Fig. 1 zeigt die Fräsvorrichtung beim Auffräsen des Hausanschlusses und Fig. 2 die Auftragsvorrichtung beim Abdichten der Anschlußstelle.

Das Gestell 8 mit dem Fräskopf 2 wird in den ausgehärteten mit einem Glasfasergewebe verstärkten Kunststoffschlauch 1 aus Polyester vom Schacht aus eingeführt und mit dem Seilzug 7 bis zur Einmündung des Hausanschlusses 3 gezogen, wie in Fig. 1 dargestellt. Der Hausanschluß 3 ist als Auswölbung mit Hilfe der Fernsehkamera 4 leicht zu erkennen. Das Gestell 8 ist mit drei Kufen 9 versehen, von denen eine hydraulisch ausfahrbar ist, um das Gestell 8 in der gewünschten Position zu fixieren. Mittels zweier hydraulisch betätigbarer Vorschubvorrichtungen 10 und 11, die aufeinander senkrecht stehen, und einer hydraulisch antreibbaren Rotationsvorrichtung 12 ist der Fräser an dem Gestell 8 befestigt und kann in die gewünschte Fräsposition gebracht werden.

In einer vereinfachten Ausführung kann auf die Vorschubvorrichtung 10 in Richtung der Kanalachse verzichtet werden. Das Gestell 8 wird dann allein mit dem Seilzug 7 in dieser Richtung bewegt.

Mit der hydraulisch betätigbaren Kippvorrichtung 13 und der Rotationsvorrichtung 14 kann der mit einem Hydraulikmotor 15 ausgerüstete Fräskopf 2 kreis- oder ellipsenförmige Bahnen beschreiben und so den Hausanschluß 3 exakt freilegen. Der Fräsvorgang wird dabei über die mit der Rotationsvorrichtung 12 verbundenen Fernsehkamera 4 beobachtet und über Hydraulikleitungen von einem nicht dargestellten Steuerpult von außen gelenkt. Nach Beendigung des Fräsvorganges wird der mit der Rotationsvorrichtung 12 verbundene Hydraulikmotor 19 eingeschaltet, der die kreisförmige Drahtbürste 20 antreibt. Das Gestell 8 wird langsam so über die Anschlußstelle hinweggezogen, daß die Drahtbürste 20 die Innenfläche des Kunststoffschlauches 1 in diesem Bereich aufrauht. Die Achse des Hydraulikmotors 19 ist vorzugsweise gegenüber der Kanalachse in Richtung des Fräskopfes 2 versetzt, so daß der Kunststoffschlauch 1 nicht auf seiner ganzen Innenfläche sondern nur im Anschlußbereich aufgerauht wird.

Statt der Drahtbürste 20 kann als Aufrauhvorrichtung auch eine Schleifvorrichtung z. B. aus radial angeordneten Schmirgelleinen-Streifen verwendet werden.

Es ist ebenfalls möglich unterhalb des Fräskopfes 2 eine im Durchmesser größere, flexible Schleifscheibe anzuordnen. Das hat den Vorteil, daß kein zusätzlicher Motor erforderlich ist, und daß die Umgebung der Anschlußstelle schon während des Fräsvorganges aufgerauht wird.

Anschließend wird der Hydraulikmotor 19 abgestellt, das Gestell 8 mit dem Fräskopf 2 wieder aus dem Kanal herausgezogen und der Fräskopf 2 mit Motor 15, Kippvorrichtung 13 und Rotationsvorrichtung 14 gegen einen Druckzylinder 16 mit einer elastischen, hutförmigen Membran 17 aus einem UV-Licht-durchlässigen Kunststoff, wie beispielsweise Polyamid, ausgetauscht, der mit einem Druckluftanschluß 18 versehen ist. Im Inneren des Druckzylinders 16 befindet sich die UV-Lichtquelle 6. Über die Membran 17 wird ein aus Glasfasern diagonal gewebter Gewebeschlauchabschnitt 5 mit einem verstärkten Rand gestülpt, der mit einem unter UV-Licht aushärtenden Polyester getränkt ist. Das Gestell 8 wird nun wieder in den Kanal eingezogen, und der Druckzylinder 16 mit der Membran 17 und dem darüber gestülpten Gewebeschlauchabschnitt 5 gegen den Einmündungsbereich des Hausanschlusses 3 gepreßt (Fig. 2). Die richtige Position wird dabei mit der Fernsehkamera 4 überwacht. Mit Hilfe von über den Anschluß 18 zugeführter Druckluft wird die Membran 17 mit dem Gewebeschlauchabschnitt 5 gegen den Rand des Ausschnittes des ausgehärteten Kunststoffschlauches 1 und die Wandung des Hausanschlusses 3 gepreßt. Der mit Polyester getränkte Gewebeschlauchabschnitt 5 wird nun mit UV-Licht angehärtet und die Membran 17 nach Ablassen des Druckes von dem gehärteten Kunststoffschlauchabschnitt abgezogen. Nachdem der Druckzylinder 16 wieder in die Ausgangsposition zurückgefahren wurde, kann das Gestell 8 wieder aus dem Kanal herausgezogen werden. Der Gewebeschlauchabschnitt 5 bewirkt eine sichere Abdichtung des Hausanschlusses 3.

Es ist natürlich auch möglich für den Fräskopf und für den Druckzylinder getrennte Gestelle zu verwenden, die auch mit Rollen bzw. Rädern statt mit Kufen ausgerüstet sein können.

Je nach Größe und Form des Druckzylinders 16 kann die Strahlungsquelle 6 so angeordnet sein, daß sie während des Einziehens des Gestells 8 und Positionierung des Druckzylinders 16 in diesem eingefahren bzw. eingeklappt ist und erst nach dem Aufblasen der Membran 17 in den dadurch entstehenden Raum hineingefahren oder- geklappt wird.

**Patentansprüche**

1. Verfahren zum Verbinden eines mit einem faserverstärkten, aushärtbaren Kunststoffschlauch sanierten Abwasserkanals mit einem Hausanschluß oder dergleichen, wobei der ausgehärtete Kunststoffschlauch (1) mit einem steuerbaren, räumlich bewegbaren Fräskopf (2) vom Innenraum des Kunststoffschlauches (1) im Bereich des Hausanschlusses (3) dem Durchmesser entsprechend ausgefräst wird, und der Fräsvorgang mittels einer in den Kunststoffschlauch (1) eingeführten Fernsehkamera (4) von außen gesteuert wird, **dadurch gekennzeichnet,** daß die Anschlußstelle nach dem Aufrauhen des Kunststoffschlauches (1) von seinem Innenraum her mit einer strahlungsvernetzten Kunstharzmasse (5) dicht schließend überdeckt und die Kunstharzmasse (5) mit einer Strahlungsquelle (6) ausgehärtet wird, wobei die Kunstharzmasse (5) mit einem dehnbaren, diagonal gewebten oder gestrickten Schlauch verstärkt ist, der an einem Rand eine Verstärkung aufweist.

2. Verfahren nach Anspruch 1, **dadurch gekennzeichnet,** daß die Strahlungsquelle (6) eine IR-Lampe ist.

3. Verfahren nach Anspruch 1, **dadurch gekennzeichnet,** daß die Strahlungsquelle (6) eine UV-Lampe ist.

4. Verfahren nach einem der Ansprüche 1 bis 3, **dadurch gekennzeichnet,** daß die Kunstharzmasse (5) Glasmikrohohlkugeln und/oder Glasfasern enthält.

5. Verfahren nach einem der Ansprüche 1 bis 4, **dadurch gekennzeichnet,** daß die Kunstharzmasse (5) außerhalb des Kanals ringförmig auf eine Membran (17) aus einem IR- bzw. UV-Lichtdurchlässigen Material aufgebracht, nach dem Einbringen der Auftragsvorrichtung in den Kanal mit dieser an den Rand der Anschlußstelle gepreßt und anschließend ausgehärtet wird.

## Claims

1. A method of connecting a sewage conduit, renovated by means of a fibre-reinforced curable plastics hose, to a domestic connection or the like, the cured plastics hose (1) being milled out in the region of the domestic connection (3) in accordance with the diameter of the latter, the milling taking place from the interior of the plastics hose (1) by means of a controllable milling head (2) movable in three dimensions and the milling process being controlled from the exterior by means of a television camera (4) inserted into the plastics hose (1), characterized in that the connection site is - after roughening of the plastics hose (1) - covered from the interior of the plastics hose in a sealing manner with a synthetic resin (5) cross-linked by radiation and the synthetic resin (5) is cured by means of a radiation source (6), the synthetic resin (5) being reinforced with a stretchable diagonally woven or knitted hose with reinforcement at one edge.

2. A method in accordance with Claim 1, characterized in that the radiation source (6) is an infrared lamp.

3. A method in accordance with Claim 1, characterized in that the radiation source (6) is an ultraviolet lamp.

4. A method in accordance with any one of Claims 1 to 3, characterized in that the synthetic resin (5) contains hollow glass microspheres and/or glass fibres.

5. A method in accordance with any one of Claims 1 to 4, characterized in that the synthetic resin (5) is - outside the conduit - applied in an annular manner onto a membrane (17) made of a material permeable to infrared or ultraviolet light, is - together with the applying device - pressed against the edge of the connection site after the introduction of the applying device into the conduit, and is subsequently cured.

## Revendications

1. Procédé pour le raccordement d'un tuyau d'égout ou canalisation des eaux usées rénové ou assaini au moyen d'un tuyau flexible en matière synthétique durcissable, renforcée par fibres avec un raccordement de décharge de bâtiment ou raccordement sanitaire domestique ou similaire, le tuyau flexible en matière synthétique durcie (1) étant fraisé au moyen d'une tête de fraisage (2) commandable, mobile dans l'espace à partir de la partie intérieure du tuyau flexible en matière synthétique (1) dans la zone de raccordement de la décharge du bâtiment ou raccordement sanitaire domestique (3) conformément au diamètre, l'opération de fraisage étant commandée de l'extérieur au moyen d'une caméra de télévision (4) commandée depuis l'extérieur, caractérisé en ce que le point de raccordement après l'opération de granulation du tuyau flexible en matière synthétique (1) à partir de sa partie intérieure est revêtu de façon à le rendre étanche d'une pâte en résine synthétique (5) réticulée par rayonnement et la pâte de résine synthétique (5) est durcie par une source de rayonnement (6), la pâte de résine synthétique (5) étant renforcée par un tuyau flexible tricoté ou tissu diagonalement extensible, qui présente un renforcement sur le bord.

2. Procédé selon la revendication 1, caractérisé en ce que la source de rayonnement (6) est une lampe à infrarouges.

3. Procédé selon la revendication 1, caractérisé en ce que la source de rayonnement (6) est une lampe à ultraviolets.

4. Procédé selon l'une des revendications 1 à 3, caractérisé en ce que la pâte de résine synthétique (5) contient des billes creuses microscopiques en verre et/ou des fibres de verre.

5. Procédé selon l'une des revendications 1 à 4, caractérisé en ce que la pâte de résine synthétique (5) est appliquée à l'extérieur de la canalisation de façon circulaire sur une membrane (17) réalisée à partir d'un matériau transparent aux rayons IR ou UV, en ce qu'après avoir introduit le dispositif d'application dans la canalisation, la pâte est compressée et pour finir durcie sur le bord du point de raccordement.

Fig.1

Fig.2